# FASCICULE DE BREVET EUROPEEN

(11) **EP 2 058 544 B1**
(45) Date de publication et mention de la délivrance du brevet: **17.07.2013**
(21) Numéro de dépôt: 08019345.1
(22) Date de dépôt: 05.11.2008
(51) Int. Cl.: F16D 65/00, F16D 65/14

(54) **Amortisseur de vibrations pour frein à disques**
Schwingungsdämpfer für Scheibenbremse
Vibration damper for disk brake

(30) Priorité: 06.11.2007 FR 0707813
(43) Date de publication de la demande: 13.05.2009
(73) Titulaire: Chassis Brakes International B.V., 1011 VM Amsterdam (NL)
(72) Inventeur: Picot, Pascal M., 77170 Brie comte Robert (FR)
(74) Mandataire: Hurwic, Aleksander Wiktor

(56) Documents cités:
- WO-A-01/27489
- JP-A- 63 167 132
- US-A- 3 722 634
- US-A- 5 014 827

## Description

L'invention concerne un amortisseur de vibrations pour freins de véhicules, un piston de frein et un frein comportant un tel amortisseur.

### ETAT DE LA TECHNIQUE

Dans un véhicule équipé de freins à disques, chaque roue qui doit être freinée par un tel système de freinage comporte un disque de freinage solidaire de la roue et un dispositif de freinage solidaire du châssis du véhicule et qui vient par friction freiner le mouvement de rotation du disque.

Le dispositif de freinage comporte de chaque côté du disque de freinage une plaquette de frein portée par un support de plaquette. Chaque support de plaquette est mobile perpendiculairement au plan du disque et est guidé à deux de ses extrémités dans des logements d'une chape.

La transmission de la commande de freinage se fait de manière connue par un circuit hydraulique qui est rempli d'un liquide de freinage. Une commande de freinage située généralement dans le poste de conduite permet d'agir sur un système de pistons pour transmettre, aux plaquettes de frein, l'effort de freinage par l'intermédiaire du liquide de freinage.

Les plaquettes de frein agissent par frottement des garnitures de freins sur le disque de freinage et permettent, lors d'un freinage, d'enserrer le disque et de freiner sa rotation.

Cependant, lorsque les garnitures de freins telles que les plaquettes de freins entrent en contact avec un organe tournant solidaire d'un essieu du véhicule tel qu'un disque de freinage, et lorsqu'il freine cet organe tournant, il peut se produire des vibrations. Ces vibrations sont plus perceptibles et gênantes à freinage modéré qu'à freinage brusque car les freinages modérés durent souvent plus longtemps, sont les plus nombreux et le conducteur du véhicule est généralement plus attentif au comportement du véhicule et au bruit qu'il fait. Par ailleurs, les freinages modérés ont lieu généralement à faible vitesse alors que le véhicule est souvent moins bruyant et que les bruits de vibrations dues au freinage sont beaucoup plus perceptibles.

Malgré les efforts pour limiter ces vibrations, l'expérience montre qu'on ne peut les éliminer et de toutes façons, le véhicule prenant de l'âge et les organes s'usant, il y aura toujours des risques de vibrations.

Une solution est donc d'amortir ces vibrations et les fréquences acoustiques qu'elles génèrent à l'ensemble du véhicule. **De tels freins sont décrits dans le document** JP 63 167 132A**.**

L'invention fournit donc des dispositions permettant d'amortir ces vibrations.

L'invention concerne donc un amortisseur de vibrations pour frein à disque, selon la revendication 1.

Avantageusement, ladite couche de matériau souple est en matériau visqueux.

Selon une forme de réalisation, la couche de matériau visqueux est en matériau viscoélastique.

Avantageusement, ledit élément cylindrique est en matériau métallique.

Alternativement, on peut également prévoir que ledit élément cylindrique est en matériau plastique.

L'invention concerne également un piston de frein appliquant l'amortisseur ainsi décrit.

L'invention concerne également un frein à disque de véhicule appliquant ce piston de frein muni de cet amortisseur.

Les différents objets et caractéristiques de l'invention apparaîtront plus clairement dans la description qui va suivre et dans les figures annexées qui représentent:
- la figure 1, une vue en coupe d'un exemple de réalisation d'un frein à disque intégrant l'amortisseur de vibrations selon l'invention,
- la figure 2, une vue en coupe d'un exemple de réalisation d'un frein à disque intégrant un amortisseur de vibrations qui ne fait pas l'objet de l'invention.

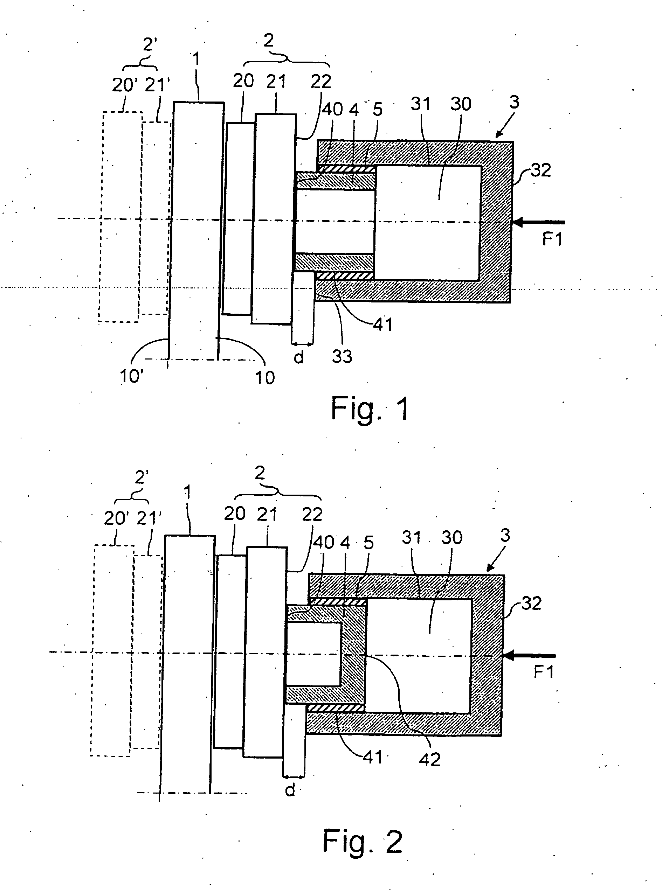

La figure 1 représente un exemple de réalisation d'un frein à disque selon l'invention.

Deux patins de freins 2 et 2' sont situées de part et d'autre d'un disque de freinage 1 représenté partiellement. De manière connue dans la technique, ce disque de freinage est solidaire d'une roue d'un véhicule.

Les patins de freins 2 et 2' comportent des plaquettes de freins 20 et 20' qui sont montées sur des supports de plaquettes de freins 22 et 22'. Ces supports peuvent coulisser perpendiculairement au plan du disque.

Un étrier et une chape non représentés possèdent des bras disposés de part et d'autre du disque de freinage. Selon un système de freins à disques courant et connu dans la technique, deux patins de frein 2 et 2' sont montés en coulissement dans la chape de part et d'autre du disque de freinage de façon à pouvoir venir frotter chacun contre une face 10 et 10' respectivement du disque de freinage.

Sur la figure 1, le patin 2 est entraîné axialement par le piston 3 perpendiculairement au plan du disque de freinage pour venir en contact avec la face 10 du disque.

Comme cela est connu dans la technique, les patins de freins 2 et 2' se déplacent perpendiculairement au plan du disque en restant parallèle à ce plan et la plaquette de frein 20 peut venir frotter contre la face 10 du disque 1.

Le déplacement du patin de frein 2 est commandé par un cylindre de roue dans lequel se trouve le piston 3 du cylindre de roue. Le cylindre de roue est raccordé au circuit de freinage hydraulique du véhicule.

Lors de l'actionnement des freins du véhicule, un fluide de freinage est comprimé dans un maître cylindre du circuit de freinage. La pression engendrée est transmise aux cylindres de roues et a pour effet de pousser le piston 3 et d'induire une force F sur la face 32 du piston 3 vers le patin de frein 2.

Avec le type de frein à disque décrit précédemment et couramment utilisé, le piston 3 pousse le patin de frein 2 jusqu'à ce que la plaquette de frein 20 entre en contact avec le disque. Prenant appui sur le disque par l'intermédiaire du patin de frein 2 et de la plaquette 20, le piston tire vers lui l'étrier qui entraîne avec lui l'autre patin de frein 2' et la plaquette de frein 20'. Celle-ci entre en contact avec la face 10' du disque de frein. La pression dans le maître cylindre augmentant, la force F augmente et le disque de frein est freiné par l'application des deux plaquettes de freins 20 et 20' contre les faces 10 et 10' du disque.

Comme on peut le voir sur la figure 1, de façon connue, le piston 2 est creux pour une question de limitation de l'inertie thermique de l'ensemble du système de freinage. En effet, un freinage se fait par frottement des plaquettes de freins sur le disque de frein. Les plaquettes de freins s'échauffent donc et la chaleur est communiquée aux supports de plaquettes, à l'étrier et aux pistons des cylindres de roues. On a intérêt à prévoir un refroidissement le plus rapide possible de ces différents organes. Pour cela, on diminue autant que possible leurs inerties thermiques. En ce qui concerne le piston d'un cylindre de roue, une solution est d'évider la partie centrale du piston. Le piston 3 agit donc sur le support de plaquette de frein 2 par sa partie périphérique située autour de la cavité 30.

A titre d'exemple de réalisation, on va décrire l'amortisseur de vibrations selon l'invention appliqué à un tel système de freinage ainsi décrit. Toutefois, il est bien entendu que l'amortisseur selon l'invention peut être mis en oeuvre dans un frein fixe comportant deux pistons disposés en vis-à-vis de part et d'autre du disque 1.

On constate qu'une source principale de vibrations se situe au niveau des plaquettes des freins et que le piston du cylindre de freins constitue un passage des vibrations. L'invention se propose d'amortir les vibrations aussi près que possible de leur source. C'est pourquoi l'invention prévoir d'aménager, entre le piston et le patin de frein, un amortisseur de vibrations.

Selon l'invention, on prévoit un élément amortisseur destiné, lors d'une commande de freinage, à entrer en priorité en contact avec le patin de frein

Cet élément amortisseur a une section droite (perpendiculaire à son axe) qui est similaire à la section droite de la cavité 30 du piston.

Avantageusement, cet élément amortisseur est cylindrique ou sensiblement cylindrique et est placé dans la cavité 30 du piston 3 comme cela est représenté sur la figure 1.

Par exemple, cet élément amortisseur se présente sous la forme d'une bague cylindrique 4 dont le diamètre de la paroi extérieur 41 est inférieur au diamètre de la paroi intérieure 31 de la cavité 30 du piston.

Entre la paroi 41 et la paroi 31 est prévu un matériau 5 qui adhère aux deux parois 41 et 31. Par ailleurs, le matériau 5 possède avantageusement des propriétés d'élasticité.

Avantageusement, le matériau 5 est un matériau viscoélastique . Il pourra être, par exemple, à base de nitrile.

L'élément amortisseur 4 est placé dans la cavité 30 de telle façon qu'en l'absence de freinage, sa face 40 émerge de la face 33 du piston d'une distance d.

Lors d'une commande de freinage, une force F est appliquée sur la face 32 du piston 3. Celui-ci se déplace axialement vers la gauche (sur la figure 1). L'élément amortisseur pousse axialement sur la face 22 du patin. La plaquette de frein 20 du patin entre en contact avec le disque 1. Un léger freinage est initié. Lorsque la force de freinage F augmente, le piston 3 continue à se déplacer vers la gauche mais l'élément amortisseur ne peut pas se déplacer davantage. Le piston 3 se déplace donc par rapport à l'élément amortisseur 4 en raison de la nature viscoélastique du matériau 5. La distance d qui sépare la face 33 du piston de la face 22 du patin se réduit jusqu'à ce que la face 33 entre en contact avec la face 22. Le piston agit alors directement sur le patin 2.

On voit donc que pendant une phase de début de freinage ou durant un freinage faible, le piston agit sur le patin de frein par l'intermédiaire de l'élément amortisseur 4. Durant cette phase, l'élément amortisseur 4 amortit et/ou absorbe les vibrations susceptibles d'être engendrées lorsque la plaquette de frein 20 est en contact avec le disque 1. Les vibrations qui sont amorties et/ou absorbées sont notamment les vibrations à propagation axiales. Mais les vibrations parallèles au plan du disque peuvent également être absorbées.

Lorsque la commande de freinage cesse, la force F diminue. Le piston se déplace vers la gauche et revient à sa position de repos avec sa face 33 située à la distance d de la face 22 du patin de frein. Du fait des propriétés élastiques du matériau 5, l'élément amortisseur 4 se déplace vers la gauche pour se retrouver dans la position représentée sur la figure 1.

La figure 2 représente un élément amortisseur 4 à titre illustratif, qui ne fait pas partie de l'invention.

Cet élément amortisseur possède une face 42 qui permet de fermer de manière étanche la cavité 30 du piston avec la coopération du matériau viscoélastique 5. Dans ces conditions, lors d'une commande de freinage, l'air contenu dans la cavité 30 sera comprimé par l'élément amortisseur 4 et concourra au retour en position de repos de l'élément amortisseur lorsque la commande de freinage cessera.

A titre d'exemple non limitatif l'élément amortisseur 4 est en matériau métallique ou en matière plastique.

L'invention concerne également un piston de frein de roue qui incorpore un tel élément amortisseur tel que cela est représenté sur la figure 1 par exemple.

L'invention concerne également un frein à disque équipé d'un tel piston de frein de roue.

## Revendications

1. Amortisseur de vibrations pour frein à disque comportant un piston (3) destiné à exercer une pression de freinage axiale (F) sur un patin de frein (2), **caractérisé en ce qu'**il comporte une bague cylindrique (4) muni sur sa surface périphérique cylindrique (41) d'une couche d'un matériau souple (5) présentant des propriétés d'adhérence , ladite bague cylindrique (4) étant destiné à être placé à l'intérieur d'une cavité axiale du piston avec ladite couche de matériau souple (5) en contact avec la paroi intérieure (31) de la cavité du piston (3) et adhérant à la paroi (31) du piston et à la paroi (41) de la bague, et que la face de la bague cylindrique (4) est de telle façon qu'en l'absence de freinage, sa face (40) émerge de la face (33) du piston d'une distance (d) et que lors d'un freinage brusque la distance (d) qui sépare la face (33) du piston de la face (22) du patin se réduit jusquà ce que la face (33) entre en contact avec la face (22).

2. Amortisseur de vibrations pour frein à disque selon la revendication 1, **caractérisé en ce que** ladite couche de matériau souple (5) est en matériau visqueux.

3. Amortisseur de vibrations pour frein à disque selon la revendication 2, **caractérisé en ce que** la couche de matériau visqueux (5) est en matériau viscoélastique.

4. Amortisseur de vibrations pour frein à disque selon l'une quelconque des revendications précédentes, **caractérisé en ce que** ledit élément cylindrique (4) est en matériau métallique.

5. Amortisseur de vibrations pour frein à disque selon l'une quelconque des revendications 1 à 3, **caractérisé en ce que** ledit élément cylindrique (4) est en matériau plastique.

6. Piston de frein de roue de véhicule **caractérisé en ce qu'**il comporte un amortisseur selon l'une quelconque des revendications précédentes.

7. Frein à disque de véhicule **caractérisé en ce qu'**il comporte un piston de frein de roue selon la revendication 6.

## Patentansprüche

1. Schwingungsdämpfer für eine Scheibenbremse, umfassend einen Kolben (3), der dazu bestimmt ist, einen axialen Bremsdruck (F) auf einen Bremsklotz (2) auszuüben, **dadurch gekennzeichnet, dass** er einen zylindrischen Ring (4) umfasst, der auf seiner zylindrischen Umfangsfläche (41) mit einer Schicht aus einem weichen Material (5), das Haftungseigenschaften aufweist, versehen ist, wobei der zylindrische Ring (4) dazu bestimmt ist, im Inneren eines axialen Hohlraums des Kolbens angeordnet zu werden, wobei die Schicht aus weichem Material (5) mit der Innenwand (31) des Hohlraums des Kolbens (3) in Kontakt ist und an der Wand (31) des Kolbens und an der Wand (41) des Ringes anhaftet, und dass die Vorderseite des zylindrischen Ringes (4) derart ist, dass, wenn kein Bremsen stattfindet, seine Vorderseite (40) über die Vorderseite (33) des Kolbens um einen Abstand (d) hinausragt, und dass, wenn ein plötzliches Bremsen stattfindet, der Abstand (d) zwischen der Vorderseite (33) des Kolbens und der Vorderseite (22) des Bremsklotzes geringer wird, bis die Seite (33) mit der Seite (22) in Kontakt kommt.

2. Schwingungsdämpfer für eine Scheibenbremse nach Anspruch 1, **dadurch gekennzeichnet, dass** die Schicht aus weichem Material (5) aus einem viskosen Material ist.

3. Schwingungsdämpfer für eine Scheibenbremse nach Anspruch 2, **dadurch gekennzeichnet, dass** die Schicht aus viskosem Material (5) aus einem viskoelastischen Material ist.

4. Schwingungsdämpfer für eine Scheibenbremse nach einem der vorhergehenden Ansprüche, **dadurch gekennzeichnet, dass** das zylindrische Element (4) aus einem metallischen Material ist.

5. Schwingungsdämpfer für eine Scheibenbremse nach einem der Ansprüche 1 bis 3, **dadurch gekennzeichnet, dass** das zylindrische Element (4) aus einem Kunststoff ist.

6. Bremskolben eines Fahrzeugrades, **dadurch gekennzeichnet, dass** er einen Dämpfer nach einem der vorhergehenden Ansprüche umfasst.

7. Scheibenbremse eines Fahrzeugs, **dadurch gekennzeichnet**, das sie einen Radbremskolben nach Anspruch 6 umfasst.

## Claims

1. Vibration damper for a disk brake comprising a piston (3) intended to apply an axial braking pressure (F) to a brake pad (2), **characterized in that** it comprises a cylindrical ring (4) provided on its cylindrical peripheral surface (41) with a layer of a soft material (5) that has properties of adherence, the said cylindrical ring (4) being intended to be positioned inside an axial cavity of the piston with the said layer of soft material (5) in contact with the interior wall (31) of the cavity of the piston (3) and adhering to the wall (31) of the piston and to the wall (41) of the ring, and **in that** the face of the cylindrical ring (4) is such that in the absence of braking, its face (40) emerges from the face (33) of the piston by a distance (d) and **in that** under abrupt braking, the distance (d) separating the face (33) of the piston from the face (22) of the pad reduces to the extent that the face (33) comes into contact with the face (22).

2. Vibration damper for a disk brake according to Claim 1, **characterized in that** the said layer of soft material (5) is made of a viscose material.

3. Vibration damper for a disk brake according to Claim 2, **characterized in that** the layer of viscose material (5) is made of a viscoelastic material.

4. Vibration damper for a disk brake according to any one of the preceding claims, **characterized in that** the said cylindrical element (4) is made of a metallic material.

5. Vibration damper for a disk brake according to any one of Claims 1 to 3, **characterized in that** the said cylindrical element (4) is made of a plastics material.

6. Vehicle wheel brake piston, **characterized in that** it comprises a damper according to any one of the preceding claims.

7. Vehicle disk brake, **characterized in that** it comprises a wheel brake piston according to Claim 6.
